# EUROPEAN PATENT APPLICATION

(11) **EP 4 776 057 A1**
(43) Date of publication of application: **15.07.2026**
(21) Application number: 24861573.4
(22) Date of filing: 30.05.2024
(51) Int. Cl.: G02F 1/01, G02F 1/035

(54) **POLARIZATION CONTROL APPARATUS AND OPTICAL SYSTEM**

(30) Priority: 06.09.2023 CN 202322411337 U
(71) Applicant: Innolight Technology (Suzhou) Ltd., Suzhou, Jiangsu 215000 (CN)
(72) Inventor: GUO, Defen, Suzhou, Jiangsu 215000 (CN); LI, Xianyao, Suzhou, Jiangsu 215000 (CN)
(74) Representative: Becker, Eberhard
(86) International application number: PCT/CN2024/096308
(87) International publication number: WO 2025/050725

(57) **Abstract**

The present application relates to a polarization control apparatus and an optical system. The polarization control apparatus comprises a polarization phase shifter, an input polarization rotator and an output polarization rotator, wherein the polarization phase shifter comprises a polarization phase shift structure, an input conversion structure and an output conversion structure, the polarization phase shift structure comprising a first waveguide, a first electrode and a second electrode, and the polarization phase shift structure being configured to adjust, under the control of the first electrode and the second electrode, the phase of a light wave in the first waveguide on the basis of a linear electro-optic effect of the first waveguide. The polarization control apparatus can obtain a relatively short waveguide length and can avoid operating under relatively high heat conditions, and thus the integration level, reliability and durability of the polarization control apparatus can be improved.

## Description

This disclosure claims priority to the Chinese Patent Application titled "POLARIZATION CONTROL APPARATUS AND OPTICAL SYSTEM," Application Number: 202322411337.9, filed on September 6, 2023, the entire contents of which are incorporated herein by reference.

### Technical Field

The present disclosure relates to the field of integrated optics, and in particular to a polarization control apparatus and an optical system.

### Description of Related Art

Polarization control is a fundamental requirement in optical systems. Currently, commercially available polarization control apparatuses are predominantly of the free-space type. However, the advancement of integrated optics necessitates the development of integrated polarization control apparatuses.

In the relevant technology, a typical integrated polarization control apparatus is formed based on silicon waveguides. The typical integrated polarization control apparatus may be constructed by alternately connecting multiple silicon waveguide polarization rotators and multiple silicon waveguide polarization phase shifters. In this manner, the silicon waveguide polarization rotators may convert the polarization state of light to obtain two different polarized lights, while the silicon waveguide polarization phase shifters may adjust a relative phase difference between the aforementioned two different polarized lights.

However, the silicon waveguide polarization phase shifters generally rely on heaters for phase adjustment. Due to the fact that the change in refractive indices of the two different polarized lights within the silicon waveguide by the heater is relatively similar, it often requires a substantial amount of heat or a longer length of silicon waveguide to achieve the desired phase difference. Nonetheless, a substantial amount of heat is not unfavorable to the long-term operation of the polarization control apparatus, as it is likely to affect the reliability and durability of the polarization control apparatus. Moreover, a longer length of silicon waveguide tends to reduce the optical bandwidth of the optical system to which the polarization control apparatus belongs, which is detrimental to enhancing the optical performance of the optical system.

### SUMMARY

Based on this, it is necessary to provide a polarization control apparatus and an optical system in view of the above technical problems, which may obtain a shorter waveguide length and avoid operating under larger heat conditions, thereby facilitating the improvement of the integration, reliability and durability of the polarization control apparatus.

In one aspect, an embodiment of the present disclosure provides a polarization control apparatus, which is disposed on a substrate, and the polarization control apparatus includes: a polarization phase shifter, an input polarization rotator and an output polarization rotator. The polarization phase shifter includes: a polarization phase shift structure, an input conversion structure and an output conversion structure. The polarization phase shift structure includes a first waveguide, a first electrode and a second electrode. The first waveguide extends along a first direction and is respectively provided with an input and an output. The first electrode and the second electrode are located on both sides of the first waveguide. The polarization phase shift structure is configured to: adjust a phase of a light wave in the first waveguide under the control of the first electrode and the second electrode based on a linear electro-optic effect of the first waveguide. The input conversion structure includes a second waveguide. The second waveguide is respectively provided with an input and an output, and the output of the second waveguide is coupled to the input of the first waveguide. The input conversion structure is configured to: couple a light wave in the second waveguide into the first waveguide. The output conversion structure includes a third waveguide. The third waveguide is respectively provided with an input and an output, and the input of the third waveguide is coupled to the output of the first waveguide. The output conversion structure is configured to: couple the phase-adjusted light wave in the first waveguide out to the third waveguide. The input polarization rotator is respectively provided with an input and an output, and the output of the input polarization rotator is coupled to the input of the second waveguide. The input polarization rotator is configured to: convert an input polarized light wave into a first polarization state light wave and a second polarization state light wave, and transmit the first polarization state light wave and the second polarization state light wave into the second waveguide. The output polarization rotator is respectively provided with an input and an output, and the input of the output polarization rotator is connected to the output of the third waveguide, and is configured to: perform a polarization state conversion at a preset ratio on the first polarization state light wave and the second polarization state light wave in the third waveguide.

In an embodiment of the present disclosure, the polarization control apparatus includes: the polarization phase shifter, the input polarization rotator and the output polarization rotator. The polarization phase shifter includes: the polarization phase shift structure, the input conversion structure and the output conversion structure. The polarization phase shifter may realize a light wave transmission between the second waveguide and the first waveguide through the input conversion structure, and adjust the phase of the light wave in the first waveguide based on the linear electro-optic effect of the first waveguide in the polarization phase shift structure, and then realize a light wave transmission between the first waveguide and the third waveguide through the output conversion structure. Thus, the first electrode and the second electrode are respectively disposed on both sides of the first waveguide. The linear electro-optic effect of the first waveguide may be utilized to conveniently and accurately adjust an electric field applied to the first waveguide by adjusting a voltage applied to the first electrode and the second electrode, thereby accurately adjusting the phase of the light wave in the first waveguide, so as to avoid relying on a heater for phase adjustment, thereby effectively shortening a length of the first waveguide, and avoiding the polarization phase shifter operating under conditions with a substantial amount of heat, thereby improving the reliability and durability of the polarization control apparatus.

By coupling the input polarization rotator to the input of the second waveguide, the input polarization rotator may be utilized to convert the input polarized light wave into the first polarization state light wave and the second polarization state light wave, and then transmit them respectively to the second waveguide, thereby facilitating the subsequent polarization phase shifter to adjust a phase difference between the first polarization state light wave and the second polarization state light wave, so as to obtain different polarization state light waves with different ratios.

Furthermore, by setting the output polarization rotator at the output of the third waveguide, the output polarization rotator may be utilized to perform the polarization state conversion at the preset ratio for the first polarization state light wave and the second polarization state light wave in the third waveguide. Thus, the polarization control apparatus may conveniently output different polarization state light waves with different ratios according to actual needs, so as to meet various usage requirements, thereby improving the versatility of the polarization control apparatus.

In some embodiments, the input polarization rotator includes an input waveguide. The input waveguide and the second waveguide are an integrated structure.

In an embodiment of the present disclosure, the input waveguide in the input polarization rotator and the second waveguide may be an integrated structure. Thus, the input waveguide and the second waveguide may be synchronously prepared based on the same process, which contributes to improving the integration of the polarization control apparatus.

In some embodiments, the output polarization rotator includes an output waveguide. The output waveguide and the third waveguide are an integrated structure.

In an embodiment of the present disclosure, the output waveguide in the output polarization rotator and the third waveguide may be an integrated structure. Thus, the output waveguide and the third waveguide may be synchronously prepared based on the same process, which contributes to improving the integration of the polarization control apparatus.

In some embodiments, the polarization control apparatus further includes an output phase shifter. The output phase shifter is respectively provided with an input and an output, the input of the output phase shifter is coupled to the output of the output polarization rotator. The output phase shifter is configured to: adjust a phase of a light wave output by the output polarization rotator.

In an embodiment of the present disclosure, the output phase shifter may adjust the light wave output by the output polarization rotator, such as, a phase of the first polarization state light wave and the second polarization state light wave, and form an arbitrary phase difference between them, thereby achieving arbitrary adjustment of the ratio of the first polarization state light wave and the second polarization state light wave, and further enabling the first polarization state light wave and the second polarization state light wave to be processed into light waves including any polarization state, further broadening the light wave type range that the polarization control apparatus provided by the present disclosure may output.

In some embodiments, the polarization control apparatus further includes an input phase shifter. The input phase shifter is respectively provided with an input and an output, the output of the input phase shifter is connected to the input of the input polarization rotator. The input phase shifter is configured to: adjust a phase of the input polarized light wave, and transmit the phase-adjusted input polarized light wave to the input polarization rotator.

In an embodiment of the present disclosure, the input phase shifter may adjust the phase of the input polarized light wave, for example, may process light waves containing any polarization state into light waves containing the first polarization state light wave and the second polarization state light wave, and transmit the obtained first polarization state light wave and second polarization state light wave to the input polarization rotator. This facilitates subsequent processing such as polarization rotation and phase difference adjustment for the first polarization state light wave and the second polarization state light wave. This further broadens the light wave type range that the polarization control apparatus provided by the present disclosure may process.

In some embodiments, a material of the first waveguide includes: X-cut lithium niobate.

In some embodiments, a material of the second waveguide and/or the third waveguide includes: a silicon-based material.

In some embodiments, a material of the input waveguide and/or the output waveguide includes: a silicon-based material.

In some embodiments, the polarization control apparatus further includes: a lower cladding and an upper cladding. The lower cladding is located on the substrate; the upper cladding covers a surface of the lower cladding on a side away from the substrate.

In some embodiments, the polarization phase shifter, the input polarization rotator, the output polarization rotator, the output phase shifter, and the input phase shifter are all located between the lower cladding and the upper cladding.

In the above embodiments, the polarization control apparatus includes a lower cladding and an upper cladding stacked on the substrate. The polarization phase shifter, the input polarization rotator, the output polarization rotator, the output phase shifter, and the input phase shifter are all disposed between the lower cladding and the upper cladding. As such, the polarization phase shifter provided by the present disclosure may be fabricated by utilizing relatively mature silicon-photonic integration process. This enables the polarization phase shifter provided by the present disclosure to have good integration, and may achieve good compatibility with silicon-based optical devices widely applied in related technologies.

On the other hand, an embodiment of the present disclosure provides an optical system, including the polarization control apparatus described in some of the above embodiments.

The optical system provided by the embodiments of the present disclosure has the same technical advantages as the polarization control apparatus described in some of the foregoing embodiments, which will not be described in detail here.

### BRIEF DESCRIPTION OF THE DRAWINGS

In order to more clearly illustrate the technical solutions in the embodiments of the present disclosure or the traditional technology, the drawings required to be used in the description of the embodiments or the traditional technology will be briefly introduced below. Clearly, the drawings in the following description are only some embodiments of the present disclosure. For those of ordinary skill in the art, other drawings may also be obtained according to these drawings without creative effort.
FIG. 1 is a schematic structural diagram of a polarization control apparatus provided in some embodiments;
FIG. 2 is a schematic three-dimensional structural diagram of the polarization control apparatus shown in FIG. 1;
FIG. 3 is a schematic structural diagram of an input polarization rotator provided in some embodiments;
FIG. 4 is a schematic cross-sectional diagram of a structure shown in FIG. 5 taken along a direction A-A and a direction B-B;
FIG. 5 is a schematic structural diagram of another polarization control apparatus provided in some embodiments;
FIG. 6 is a schematic structural diagram of yet another polarization control apparatus provided in some embodiments;
FIG. 7 is a schematic cross-sectional diagram of a polarization phase shift structure provided in some embodiments;
FIG. 8 is a schematic cross-sectional diagram of the structure shown in FIG. 7 taken along a direction C-C;
FIG. 9 is a schematic structural diagram of an input conversion structure provided in some embodiments;
FIG. 10 is a schematic diagram of an orthographic projection of a second waveguide and a first waveguide coupled thereto on a substrate in the structure shown in FIG. 9;
FIG. 11 is a schematic structural diagram of an output conversion structure provided in some embodiments;
FIG. 12 is a schematic diagram of an orthographic projection of a third waveguide and the first waveguide coupled thereto on the substrate in the structure shown in FIG. 11.

### Description of Reference Numerals:

1- Polarization Control Apparatus, 11- Polarization Phase shifter, 111- Polarization Phase shift Structure, 112- Input conversion structure, 113- Output conversion structure, 1111-First Waveguide, 1112- First Electrode, 1113- Second Electrode, 1121- Second Waveguide, 1131-Third Waveguide, 1141- Fourth Waveguide, 1151- Fifth Waveguide, 12- Input Polarization Rotator, 121- Input Waveguide, 13- Output Polarization Rotator, 131- Output Waveguide, 14-Output Phase shifter, 141- Output Phase shift Structure, 142- Third Conversion Structure, 143-Fourth Conversion Structure, 15- Input Phase shifter, 151- Input Phase shift Structure, 152- First Conversion Structure, 153- Second Conversion Structure, 16- Substrate, 17- Lower Cladding, 18-Upper Cladding, 19- Connection Pad, H1- Electrode Lead Hole, A1- Input Region, A2-Polarization Rotation Region, A3- Output Region.

### DESCRIPTION OF THE EMBODIMENTS

In order to facilitate understanding of the present disclosure, the present disclosure will be described more fully below with reference to the related drawings. Embodiments of the present disclosure are shown in the drawings. However, the present disclosure may be implemented in many different forms and is not limited to the embodiments described herein. On the contrary, the purpose of providing these embodiments is to make the disclosure of the present disclosure more thorough and comprehensive.

Unless otherwise defined, all technical and scientific terms used herein have the same meaning as commonly understood by those skilled in the technical field of the present disclosure. The terms used herein in the specification of the present disclosure are only for the purpose of describing specific embodiments and are not intended to limit the present disclosure.

It should be noted that when an element is considered to be "connected" to another element, it may be directly connected to another element, or connected to another element through an intermediate element. In addition, in the following embodiments, "connection", if there is transmission of electrical signals or data between the connected objects, should be understood as "electrical connection", "communication connection", etc.

As used herein, the singular forms "a", "an" and "the" may also include plural forms, unless the context clearly indicates otherwise. It should also be understood that the terms "include/comprise" or "have" and the like specify the presence of stated features, integers, steps, operations, components, portions or combinations thereof, but do not exclude the possibility of the presence or addition of one or more other features, integers, steps, operations, components, portions or combinations thereof. Meanwhile, the term "and/or" used in this specification includes any and all combinations of the related listed items.

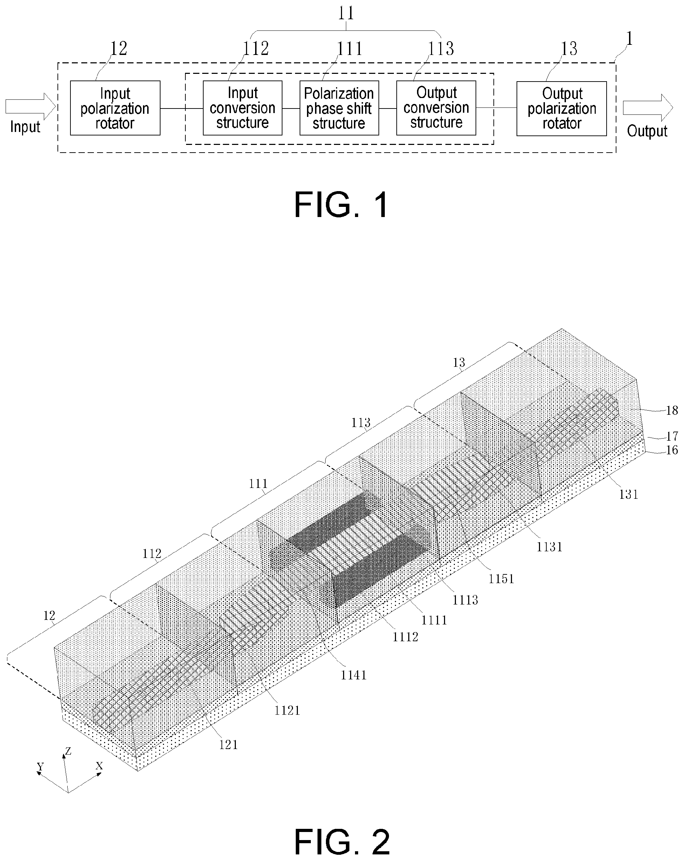

An embodiment of the present disclosure provides a polarization control apparatus, please refer to FIG. 1 to FIG. 2. The polarization control apparatus 1 is disposed on a substrate 16, and the polarization control apparatus 1 includes: a polarization phase shifter 11, an input polarization rotator 12, and an output polarization rotator 13. The polarization phase shifter 11 includes: a polarization phase shift structure 111, an input conversion structure 112, and an output conversion structure 113. The polarization phase shift structure 111 includes a first waveguide 1111, a first electrode 1112, and a second electrode 1113. The first waveguide 1111 extends along a first direction (for example, X direction). The first electrode 1112 and the second electrode 1113 are located on both sides of the first waveguide 1111. The polarization phase shift structure 111 is configured to: adjust a phase of a light wave in the first waveguide 1111 under the control of the first electrode 1112 and the second electrode 1113 based on a linear electro-optic effect of the first waveguide 1111. The input conversion structure 112 includes a second waveguide 1121 and a fourth waveguide 1141 optically connected to the second waveguide 1121. The fourth waveguide 1141 and the first waveguide 1111 are a waveguide connected together, that is, the fourth waveguide 1141 and the first waveguide 1111 are different portions of the same waveguide. The input conversion structure 112 is configured to: couple a light wave in the second waveguide 1121 into the first waveguide 1111. The output conversion structure 113 includes a third waveguide 1131 and a fifth waveguide 1151 optically coupled and connected to the third waveguide 1131. The fifth waveguide 1151 and the first waveguide 1111 are a waveguide connected together, that is, the fourth waveguide 1141, the fifth waveguide 1151, and the first waveguide 1111 are different portions of the same waveguide. The output conversion structure 113 is configured to: couple the phase-adjusted light wave in the first waveguide 1111 out to the third waveguide 1131. The input polarization rotator 12 is optically connected to the second waveguide 1121. The input polarization rotator 12 is configured to: convert an input polarized light wave into a first polarization state light wave and a second polarization state light wave, and transmit the first polarization state light wave and the second polarization state light wave into the second waveguide 1121. The output polarization rotator 13 is optically connected to the third waveguide 1131, and is configured to: perform a polarization state conversion at a preset ratio on the first polarization state light wave and the second polarization state light wave in the third waveguide 1131.

Here, the linear electro-optic effect of the waveguide refers to an optical characteristic that the waveguide may linearly change its own refractive index in response to changes in an externally applied electric field. Based on the change in the refractive index of the waveguide, the phase of the light wave entering the waveguide, for example, a transverse electric wave (referred to as TE wave) or a transverse magnetic wave (referred to as TM wave), will also change.

In an embodiment of the present disclosure, the polarization phase shifter 11 may realize a light wave transmission between the second waveguide 1121 and the first waveguide 1111 through the input conversion structure 112, and adjust the phase of the light wave in the first waveguide 1111 based on the linear electro-optic effect of the first waveguide 1111 in the polarization phase shift structure 111, and then realize a light wave transmission between the first waveguide 1111 and the third waveguide 1131 through the output conversion structure 113. In this way, the first electrode 1112 and the second electrode 1113 are respectively disposed on both sides of the first waveguide 1111. The linear electro-optic effect of the first waveguide 1111 may be utilized to conveniently and accurately adjust an electric field applied to the first waveguide 1111 by adjusting a voltage applied to the first electrode 1112 and the second electrode 1113, so that the phase of the light wave in the first waveguide 1111 may be accurately adjusted. Thus, it is possible to avoid relying on a heater for phase adjustment, thereby effectively shortening a length of the first waveguide 1111, and avoiding the polarization phase shifter 11 from operating under conditions of a substantial amount of heat, thereby improving the reliability and durability of the polarization control apparatus 1.

An input of the second waveguide 1121 is coupled to the input polarization rotator 12. The input polarization rotator 12 may be utilized to convert the input polarized light wave into the first polarization state light wave and the second polarization state light wave. The first polarization state light wave and the second polarization state light wave are, for example, TE waves and TM waves. Then the first polarization state light wave and the second polarization state light wave are transmitted to the second waveguide 1121, thereby facilitating the subsequent polarization phase shifter 11 to adjust a phase difference between the first polarization state light wave and the second polarization state light wave to obtain light waves containing different ratios of a first polarization state and a second polarization state.

Furthermore, by setting the output polarization rotator 13 at an output of the third waveguide 1131, the output polarization rotator 13 may be utilized to the perform polarization state conversion at the preset ratio on the first polarization state light wave and the second polarization state light wave in the third waveguide 1131. In this way, the polarization control apparatus 1 may correspondingly output light waves containing different ratios of different polarization states according to actual needs to meet various usage requirements, thereby improving the versatility of the polarization control apparatus 1.

In some examples, a material of the first waveguide 1111 includes: X-cut lithium niobate. A material of the second waveguide 1121 and the third waveguide 1131 may be silicon or silicon nitride.

Optionally, a linear electro-optic coefficient of the first waveguide 1111 includes: n_{TE0}³ r₃₃-n_{TM0}³ r₁₃, r₃₃ = 30pm/v, r₁₃ = 7.5pm/v; wherein, n_{TE0} represents a refractive index of a waveguide for a TE mode light wave; n_{TM0} represents a refractive index of the waveguide for a TM mode light wave; r₃₃ represents a component of the electro-optic coefficient of the lithium niobate thin film crystal on a (3,3) element of an electro-optic coefficient matrix; r₁₃ represents a component of the electro-optic coefficient of the lithium niobate thin film crystal on a (1,3) element of the electro-optic coefficient matrix.

Based on this, the polarization control apparatus 1 provided by the embodiments of the present disclosure may utilize the linear electro-optic effect of the first waveguide 1111, linearly changing a refractive index of the first waveguide 1111 by changing the voltage applied to the first electrode 1112 and the second electrode 1113, thereby linearly changing the phase of the light wave in the first waveguide 1111, that is, there is a linear relationship between the externally applied voltage and the refractive index of the first waveguide 1111. Thus, the phase of the light wave entering the first waveguide 1111 may be linearly adjusted, greatly improving the accuracy and convenience of phase adjustment.

Moreover, the first waveguide 1111 exhibits significantly different linear electro-optic coefficients for different polarization states of light, such as TE waves and TM waves. Consequently, the polarization control apparatus 1 may induce a predetermined phase difference between the TE waves and the TM waves entering the first waveguide 1111 by applying a relatively small voltage, thereby obviating the need for a longer waveguide length.

In some examples, the substrate 16 may be a silicon substrate, a silicon oxide substrate, or a silicon nitride substrate.

In some embodiments, both the first electrode 1112 and the second electrode 1113 may include strip electrodes.

In some examples, end portions of the second waveguide 1121 and the first waveguide 1111 may be coupled together by adiabatic coupling in a direction perpendicular to a thickness direction of the substrate 16. In this way, a light wave input via the second waveguide 1121 may be coupled into the first waveguide 1111 through the input conversion structure 112 with relatively low loss, so as to facilitate the polarization phase shift structure 111 to perform phase adjustment on the input light wave.

In some embodiments, a material of the second waveguide 1121 and/or the third waveguide 1131 includes: a silicon-based material.

Similarly, end portions of the third waveguide 1131 and the first waveguide 1111 are coupled together by adiabatic coupling. In this way, the light wave processed by the polarization phase shift structure 111 may be coupled into the third waveguide 1131 through the output conversion structure 113 with relatively low loss. Subsequently, the light wave may also be transmitted to other waveguides/devices.

Please refer to FIG. 1 and FIG. 2, in some embodiments, the polarization control apparatus 1 further includes the input polarization rotator 12. The input polarization rotator 12 has an input and an output respectively, and the output of the input polarization rotator 12 is coupled with the second waveguide 1121. The input polarization rotator 12 is configured to: convert the input polarized light wave into the first polarization state light wave and the second polarization state light wave, and transmit the first polarization state light wave and the second polarization state light wave into the second waveguide 1121. This facilitates the subsequent polarization phase shifter 11 to adjust the phase difference between the first polarization state light wave and the second polarization state light wave, so as to obtain different polarization state light waves with different ratios.

In some embodiments, the input polarization rotator 12 may rotate a polarization angle of the input polarized light wave, such as TE waves or TM waves, so that a mode of a portion of the input polarized light wave is converted, thereby converting the TM waves or TE waves into TM waves and TE waves with a desired ratio.

Please refer to FIG. 2, in some embodiments, the input polarization rotator 12 includes an input waveguide 121. The input waveguide 121 and the second waveguide 1121 are an integrated structure. That is to say, the input waveguide 121 and the second waveguide 1121 may be prepared synchronously based on the same process, which contributes to simplifying the fabrication process.

In some embodiments, a material of the input waveguide and/or an output waveguide includes: a silicon-based material.

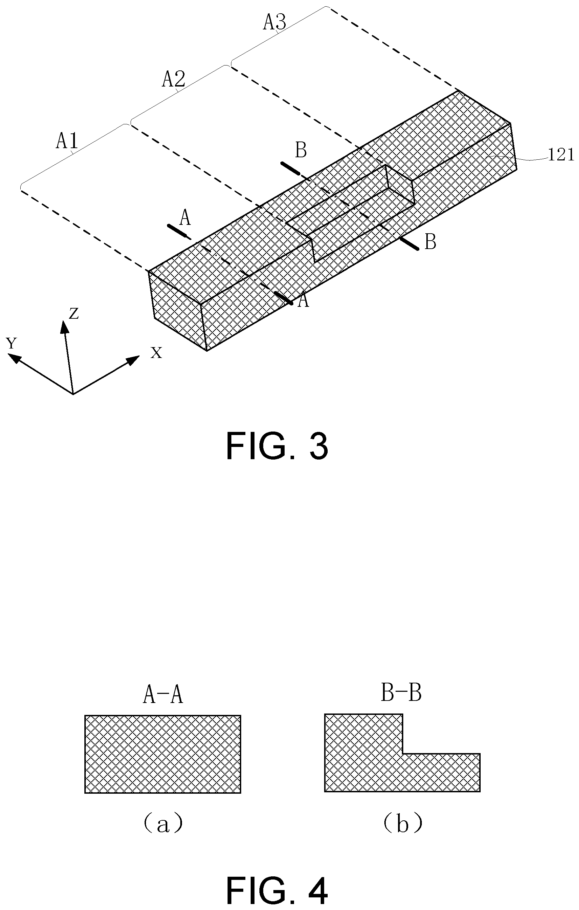

Please refer to FIG. 3 and FIG. 4, in some possible embodiments, the input waveguide 121 in the input polarization rotator 12 may be divided into an input region A1, a polarization rotation region A2, and an output region A3 connected in sequence. A cross-sectional shape of the input region A1 and the output region A3 of the input waveguide 121 in the second direction (such as Y direction, perpendicular to the first direction) is rectangular; a cross-sectional shape of the polarization rotation region A2 in the second direction (such as Y direction) is L-shaped. In this way, when the input polarized light wave, such as TE waves, enters from the input region A1 and is transmitted to the polarization rotation region A2, since the cross-sectional shape of the input waveguide 121 changes abruptly from a symmetric rectangle to an asymmetric L-shape, a portion of the TE waves undergoes mode hybridization and is converted into TM waves, so that TE waves and TM waves with a specific ratio may be output from the output region A3; or, when the input TM waves enter from the input region A1 and are transmitted to the polarization rotation region A2, since the cross-sectional shape of the input waveguide 121 changes abruptly from a symmetric rectangle to an asymmetric L-shape, a portion of the TM waves undergoes mode hybridization and is converted into TE waves, so that TE waves and TM waves with a specific ratio may be output from the output region A3.

Please refer to FIG. 1 and FIG. 2, in some embodiments, the polarization control apparatus 1 further includes an output polarization rotator 13. The output polarization rotator 13 has an input and an output respectively, and the input of the output polarization rotator 13 is connected with the output of the third waveguide 1131. The output polarization rotator 13 is configured to: perform the polarization state conversion of the preset ratio on the first polarization state light wave and the second polarization state light wave in the third waveguide 1131.

In an embodiment of the present disclosure, by setting the output polarization rotator 13 at the output of the third waveguide 1131, the output polarization rotator 13 may be utilized to perform the polarization state conversion of the preset ratio on the first polarization state light wave and the second polarization state light wave in the third waveguide 1131. In this way, the first polarization state light wave and the second polarization state light wave (such as TE waves and TM waves) with any ratio output by the aforementioned polarization phase shifter 11 are transmitted to the output polarization rotator 13, and the output polarization rotator 13 may further perform the polarization state conversion of the preset ratio on the two polarization state light waves with any ratio, and correspondingly output different polarization state light waves with different ratios to meet various usage requirements, thereby improving the versatility of the polarization control apparatus 1.

Please refer to FIG. 2, in some embodiments, the output polarization rotator 13 includes an output waveguide 131. The output waveguide 131 and the third waveguide 1131 are an integrated structure. In this way, the output waveguide 131 and the third waveguide 1131 may be prepared synchronously based on the same process, which contributes to improving the integration of the polarization control apparatus 1.

Please refer to FIG. 2 to FIG. 4 for comprehension, in some possible embodiments, the output waveguide 131 in the output polarization rotator 13 may have the same structure as the input waveguide 121. That is, the output waveguide 131 may also be divided into the input region A1, the polarization rotation region A2, and the output region A3 connected in sequence. The cross-sectional shape of the input region A1 and the output region A3 in the Y direction is rectangular, and the cross-sectional shape of the polarization rotation region A2 in the Y direction is L-shaped. In this way, the output polarization rotator 13 may further process the TE waves and TM waves with a specific ratio obtained from the polarization phase shifter 11 into TE waves and TM waves with a preset ratio.

In the following embodiments, through further optimization settings of related devices, the light wave type range that the polarization control apparatus 1 may output and the acceptable input light wave type range are respectively broadened.

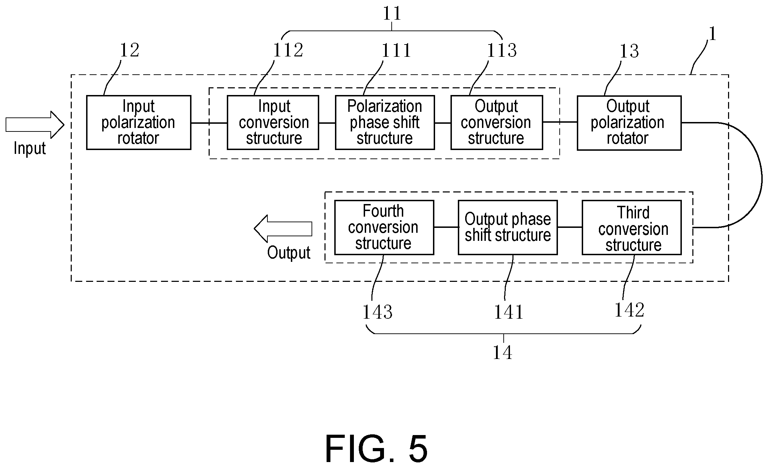

Please refer to FIG. 5, in some embodiments, the polarization control apparatus 1 includes an output phase shifter 14 in addition to the structure shown in FIG. 1. The output phase shifter 14 has an input and an output respectively, and the input of the output phase shifter 14 is coupled with an output of the output polarization rotator 13. The output phase shifter 14 is configured to: adjust a phase of a light wave output by the output polarization rotator 13.

Please refer to FIG. 5, in some embodiments, the output phase shifter 14 includes: an output phase shift structure 141, a third conversion structure 142 coupled with an input of the output phase shift structure 141, and a fourth conversion structure 143 coupled with an output of the output phase shift structure 141. The output phase shift structure 141 has the same structure as the polarization phase shift structure 111. The third conversion structure 142 has the same structure as the input conversion structure 112. The fourth conversion structure 143 has the same structure as the output conversion structure 113. Moreover, the second waveguide 1121 in the third conversion structure 142 is the same type as the output waveguide 131 in the output polarization rotator 13, or may be connected as an integrated structure. The output phase shift structure 141 and the polarization phase shift structure 111 may be arranged adjacently in the polarization control apparatus 1, so that when hybrid integration is performed, a different type of lithium niobate substrate may be integrated in the silicon substrate to simultaneously achieve the effect of making several lithium niobate waveguides. That is to say, by arranging the output phase shift structure 141 and the polarization phase shift structure 111 at adjacent positions in the integrated chip, a lithium niobate substrate may be shared, so that one lithium niobate substrate may be made into two phase shift structures. This saves the process flow, and the component layout may be achieved by connecting a curved waveguide between the output phase shift structure 141 and the polarization phase shift structure 111.

In an embodiment of the present disclosure, the output phase shifter 14 may adjust the light wave output by the output polarization rotator 13, for example, a phase of the first polarization state light wave and the second polarization state light wave, and form an arbitrary phase difference between them, so that the ratio of the first polarization state light wave and the second polarization state light wave may be arbitrarily adjusted, and thus light waves including any polarization state may be obtained, further broadening the light wave type range that the polarization control apparatus 1 provided by the present disclosure may output.

Please refer to FIG. 5, it should be noted that in some embodiments of the present disclosure, the devices are connected through waveguides (for example, the first waveguide, the second waveguide, or the third waveguide). The arrangement of various waveguides is not limited to extending along a specific direction, and may also be arranged in a correspondingly curved manner to match the arrangement space of the polarization control apparatus 1.

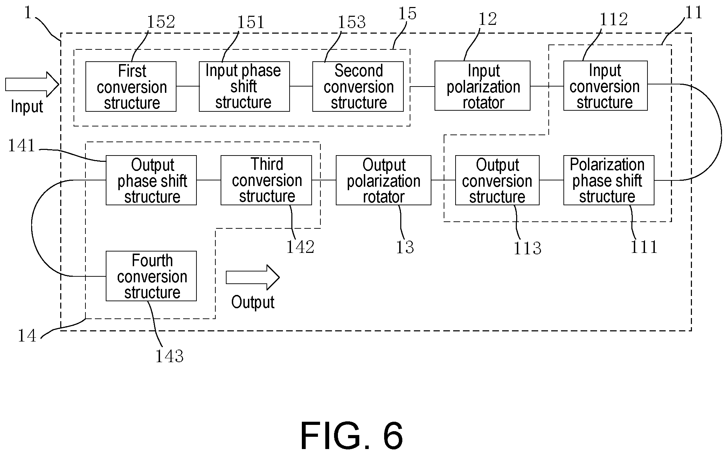

Please refer to FIG. 6, in some embodiments, the polarization control apparatus 1 includes an input phase shifter 15 in addition to the structure shown in FIG. 5. The input phase shifter 15 has an input and an output respectively, and the output of the input phase shifter 15 is connected with an input of the input polarization rotator 12. The input phase shifter 15 is configured to: adjust a phase of the input polarized light wave, and transmit the phase-adjusted input polarized light wave to the input polarization rotator 12.

Please refer to FIG. 6, in some embodiments, the input phase shifter 15 includes: an input phase shift structure 151, a first conversion structure 152 coupled with an input of the input phase shift structure 151, and a second conversion structure 153 coupled with an output of the input phase shift structure 151. The input phase shift structure 151 has the same structure as the polarization phase shift structure 111. The first conversion structure 152 has the same structure as the input conversion structure 112. The second conversion structure 153 has the same structure as the output conversion structure 113. Moreover, the third waveguide 1131 in the second conversion structure 153 is the same type as the input waveguide 121 in the input polarization rotator 12, or may be connected as an integrated structure.

In an embodiment of the present disclosure, the input phase shifter 15 may adjust the phase of the input polarized light wave, for example, may process light waves containing any polarization state into light waves containing the first polarization state light wave and the second polarization state light wave, and transmit the obtained first polarization state light wave and second polarization state light wave to the input polarization rotator 12. This facilitates subsequent processing such as polarization rotation and phase difference adjustment for the first polarization state light wave and the second polarization state light wave. This further broadens the light wave type range that the polarization control apparatus 1 provided by the present disclosure may process.

Please refer to FIG. 2, in some embodiments, the polarization control apparatus 1 further includes: a lower cladding 17 and an upper cladding 18. The lower cladding 17 is located on the substrate 16; the upper cladding 18 covers a surface of the lower cladding 17 on a side facing away from the substrate 16.

It should be noted that, in order to more clearly show other layers/devices located below the upper cladding 18, the upper cladding 18 is shown as transparent in some figures (for example, FIG. 2, FIG. 4, FIG. 9, FIG. 11, and FIG. 12).

In some examples, the lower cladding 17 and the upper cladding 18 may include materials with a lower refractive index, to ensure that both the lower cladding 17 and the upper cladding 18 may have a large refractive index difference with other optical devices (for example, the polarization phase shifter 11) disposed between the upper cladding 18 and the lower cladding 17. In this way, the light wave may be confined to transmit within the optical devices to avoid undesirable defects such as light wave leakage or transmission loss.

In some examples, the lower cladding 17 and the upper cladding 18 may include a silicon oxide layer or a polysilicon layer.

In some embodiments, the polarization phase shifter 11, the input polarization rotator 12, the output polarization rotator 13, the output phase shifter 14, the input phase shifter 15, and the waveguides located in each device may all be correspondingly disposed between the lower cladding 17 and the upper cladding 18.

In some examples, the input waveguide 121 in the input polarization rotator 12 has a material different from both the lower cladding 17 and the upper cladding 18. Optionally, the input waveguide 121 may include a silicon material.

In some examples, the output waveguide 131 in the output polarization rotator 13 has a material different from both the lower cladding 17 and the upper cladding 18. Optionally, the output waveguide 131 may include a silicon material.

In the above embodiments, the polarization phase shifter 11, the input polarization rotator 12, the output polarization rotator 13, the input phase shifter 14, and the output phase shifter 15 are all disposed between the lower cladding 17 and the upper cladding 18. In this way, the polarization control apparatus 1 provided by the present disclosure may be fabricated by utilizing a relatively mature silicon photonic integration process. This enables the polarization control apparatus 1 provided by the present disclosure to have better integration. Furthermore, good compatibility with silicon-based optical devices widely applied in related technologies may be obtained. This further broadens the applicable range of the polarization control apparatus 1.

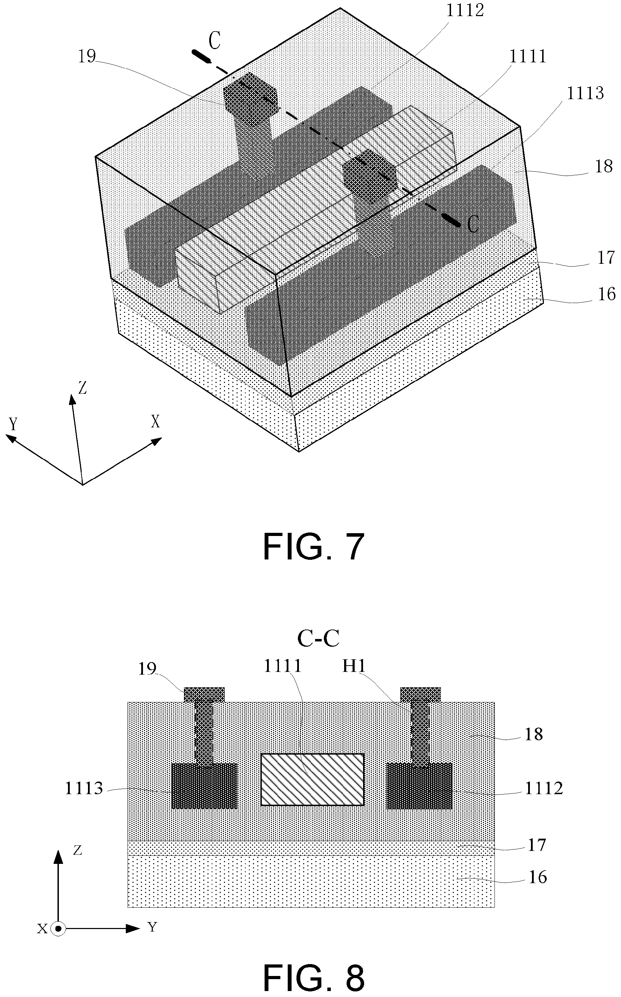

Please refer to FIG. 7 and FIG. 8, in some embodiments, the upper cladding 18 has electrode lead-out holes H1 to respectively expose the first electrode 1112 and the second electrode 1113. The polarization control apparatus 1 further includes: connection pads 19 disposed in the electrode lead-out holes H1. The connection pads 19 are respectively electrically connected to the first electrode 1112 and the second electrode 1113 correspondingly. In this way, an external control circuit (not shown in the figures) may conveniently apply control voltage to the first electrode 1112 and the second electrode 1113 respectively through the connection pads 19, thereby changing electric field characteristics in the first waveguide 1111, so as to adjust the refractive index of the first waveguide 1111.

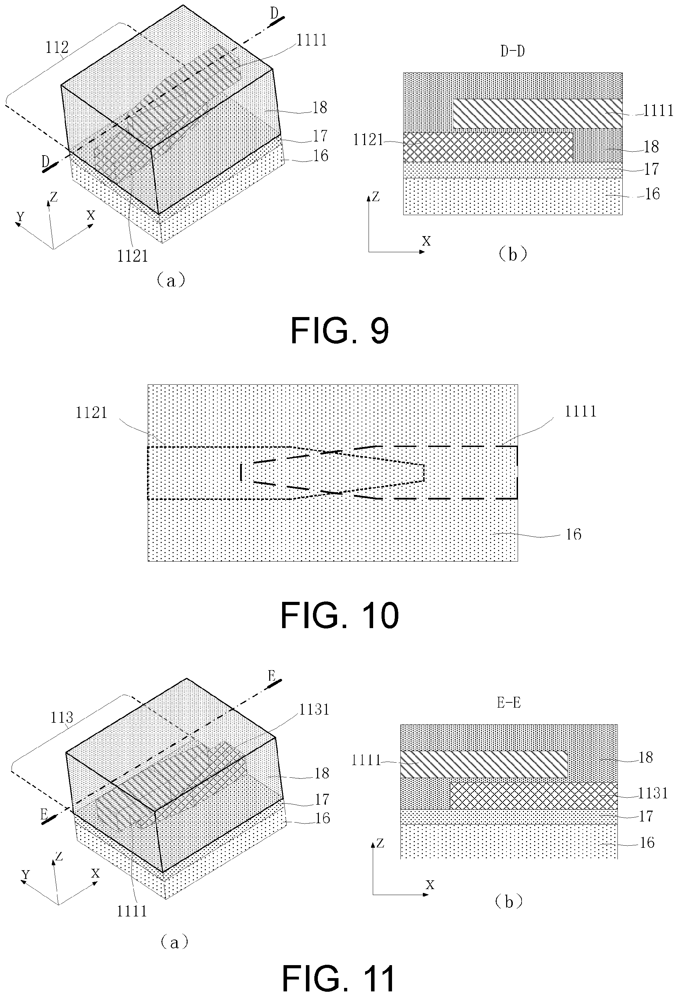

Please refer to FIG. 9 to FIG. 12, in some embodiments, the waveguide in each conversion structure is stacked with the coupled different type of waveguide, and orthogonal projections of the two in the thickness direction of the substrate 16 at least partially overlap each other. The following description is provided by taking the input conversion structure 112 and the output conversion structure 113 as examples respectively.

Please refer to FIG. 9 and FIG. 10, in some embodiments, the second waveguide 1121 in the input conversion structure 112 is stacked with the coupled first waveguide 1111, and orthogonal projections of the second waveguide 1121 and the first waveguide 1111 on the substrate 16 at least partially overlap each other. In this way, the light wave in the second waveguide 1121 may be gradually released into the coupled first waveguide 1111, and mode mutation of the light wave during the coupling process is effectively avoided. Thus, the transmission loss of the light wave in the input conversion structure 112 is reduced and the coupling efficiency is improved.

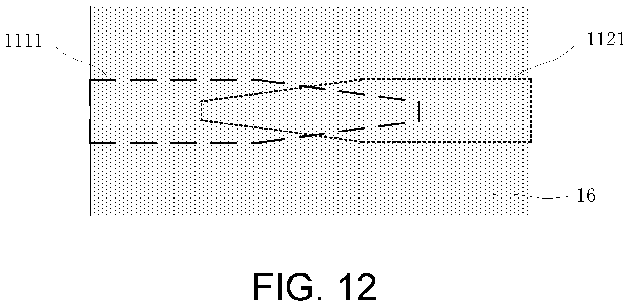

Please refer to FIG. 11 and FIG. 12, in some embodiments, the third waveguide 1131 in the output conversion structure 113 is stacked with the coupled first waveguide 1111, and orthogonal projections of the third waveguide 1131 and the first waveguide 1111 on the substrate 16 at least partially overlap each other. In this way, the light wave in the first waveguide 1111 may be gradually released into the coupled third waveguide 1131, and mode mutation of the light wave during the coupling process is effectively avoided. Thus, the transmission loss of the light wave in the output conversion structure 113 is reduced and the coupling efficiency is improved.

In some embodiments, an optical system is further provided, including the polarization control apparatus 1 described in the above embodiments.

In some possible implementations, the optical system may be an optical switch. The optical switch including the polarization control apparatus 1 may be disposed in a node region of an optical communication network to implement functions such as optical signal switching and optical signal interconnection of light waves in the optical communication network.

In some possible implementations, the optical system may be an optical modem. The optical modem including the polarization control apparatus 1 may be disposed in an optical communication line, or may be disposed in an optical communication terminal device to implement functions such as optical communication transmission, optical signal processing, and optical signal access.

The optical system provided by the embodiments of the present disclosure has the same technical advantages as the aforementioned polarization control apparatus 1, which will not be described in detail here.

In the description of this specification, descriptions referring to terms such as "some embodiments", "other embodiments", "ideal embodiments" and the like mean that specific features, structures, materials or characteristics described in connection with the embodiment or example are included in at least one embodiment or example of the present utility model. In this specification, the schematic descriptions of the above terms do not necessarily refer to the same embodiment or example.

The technical features of the above embodiments may be combined arbitrarily. To make the description concise, not all possible combinations of the technical features in the above embodiments are described. However, as long as there is no contradiction in the combinations of these technical features, they should all be considered as the scope recorded in this specification.

The above-described embodiments only express several implementation modes of the present disclosure, and the descriptions thereof are relatively specific and detailed, but should not be understood as limiting the scope of the utility model. It should be noted that for those of ordinary skill in the art, without departing from the concept of the present disclosure, several modifications and improvements may also be made, which all belong to the protection scope of the present disclosure. Therefore, the protection scope of the patent of the present disclosure shall be subject to the appended claims.

## Claims

1. A polarization control apparatus, **characterized in that**, being disposed on a substrate, the polarization control apparatus comprising:
a polarization phase shifter, wherein the polarization phase shifter comprises:
a polarization phase shift structure, comprising a first waveguide, a first electrode and a second electrode, wherein the first waveguide extends along a first direction and is respectively provided with an input and an output, the first electrode and the second electrode are located on both sides of the first waveguide, the polarization phase shift structure is configured to: adjust a phase of a light wave in the first waveguide under control of the first electrode and the second electrode based on a linear electro-optic effect of the first waveguide;
an input conversion structure, comprising a second waveguide, wherein the second waveguide is respectively provided with an input and an output, and the output of the second waveguide is coupled to the input of the first waveguide, the input conversion structure is configured to: couple a light wave in the second waveguide into the first waveguide;
an output conversion structure, comprising a third waveguide, wherein the third waveguide is respectively provided with an input and an output, and the input of the third waveguide is coupled to the output of the first waveguide, the output conversion structure is configured to: couple the light wave with adjusted phase in the first waveguide out to the third waveguide;
an input polarization rotator, which is respectively provided with an input and an output, wherein the output of the input polarization rotator is coupled to the input of the second waveguide, the input polarization rotator is configured to: convert an input polarized light wave into a first polarization state light wave and a second polarization state light wave, and transmit the first polarization state light wave and the second polarization state light wave into the second waveguide;
an output polarization rotator, which is respectively provided with an input and an output, wherein the input of the output polarization rotator is connected to the output of the third waveguide, and the output polarization rotator is configured to: perform a polarization state conversion at a preset ratio on the first polarization state light wave and the second polarization state light wave in the third waveguide.

2. The polarization control apparatus according to claim 1, **characterized in that**, the input polarization rotator comprises an input waveguide, wherein the input waveguide and the second waveguide are an integrated structure.

3. The polarization control apparatus according to claim 1, **characterized in that**, the output polarization rotator comprises an output waveguide, wherein the output waveguide and the third waveguide are an integrated structure.

4. The polarization control apparatus according to claim 2 or 3, **characterized in that**, further comprising:
an output phase shifter, wherein the output phase shifter is respectively provided with an input and an output, the input of the output phase shifter is coupled to the output of the output polarization rotator, the output phase shifter is configured to: adjust a phase of a light wave output by the output polarization rotator.

5. The polarization control apparatus according to claim 4, **characterized in that**, further comprising:
an input phase shifter, wherein the input phase shifter is respectively provided with an input and an output, the output of the input phase shifter is connected to the input of the input polarization rotator, the input phase shifter is configured to: adjust a phase of the input polarized light wave, and transmit the input polarized light wave with adjusted phase to the input polarization rotator.

6. The polarization control apparatus according to claim 1, **characterized in that**, a material of the first waveguide comprises: X-cut lithium niobate.

7. The polarization control apparatus according to claim 4, **characterized in that**, a material of the second waveguide and/or the third waveguide is silicon or silicon nitride.

8. The polarization control apparatus according to claim 7, **characterized in that**, the input polarization rotator comprises an input waveguide, the output polarization rotator comprises an output waveguide, wherein the input waveguide and the second waveguide are an integrated structure, and the output waveguide and the third waveguide are an integrated structure;
a material of the input waveguide and/or the output waveguide is silicon or silicon nitride.

9. The polarization control apparatus according to claim 8, **characterized in that**, further comprising:
a lower cladding, located on the substrate;
an upper cladding, covering a surface of the lower cladding on a side facing away from the substrate;
wherein the polarization phase shifter, the input polarization rotator, the output polarization rotator, the output phase shifter, and the input phase shifter are all located between the lower cladding and the upper cladding.

10. An optical system, **characterized in that**, comprising the polarization control apparatus according to any one of claims 1 to 9.
